# EUROPÄISCHE PATENTSCHRIFT

(11) **EP 0 822 694 B1**
(45) Veröffentlichungstag und Bekanntmachung des Hinweises auf die Patenterteilung: **18.02.2004**
(21) Anmeldenummer: 97110418.7
(22) Anmeldetag: 25.06.1997
(51) Int. Cl.: H04M 1/65, H04M 1/64, H04M 1/247

(54) **Bedienerführung eines Anrufbeantworters**
User guidance for a telephone answering machine
Assistance d'utilisation pour un répondeur téléphonique

(30) Priorität: 01.08.1996 DE 19631127
(43) Veröffentlichungstag der Anmeldung: 04.02.1998
(73) Patentinhaber: SIEMENS AKTIENGESELLSCHAFT, 80333 München (DE)
(72) Erfinder: Merker, Andreas, Dipl.-Ing., 48612 Horstmar (DE)

(56) Entgegenhaltungen:
- FR-A- 2 689 352
- US-A- 4 881 260
- US-A- 5 163 082
- US-A- 5 499 285

## Beschreibung

Die Erfindung betrifft ein Verfahren gemäß dem Oberbegriff des Patentanspruchs 1.

Ein Kommunikationsendgerät, beispielsweise ein digitaler Anrufbeantworter, kann mit festgespeicherten Phrasen zu Bedienerführung, zur Zeit- und Datumsansage ausgestattet sein.

Bei einem Anrufbeantworter erfolgt die Speicherung sämtlicher Sprachdaten, der Ansagen, der eingehenden Nachrichten, und der Phrasen vorzugsweise in nichtflüchtigen Speichern, beispielsweise in sogenannten Flash-RAMs. Eine übliche Speichergröße pro Baustein ist 4 Mbit. Diese Flash-RAMs sind insbesondere im Vergleich zu bekannten Nur-Lese-Speichern, sogenannten ROM-Speicherbausteinen, teuer.

Bei einer angenommenen mittleren Datenrate von ca. 4,4 kBit pro Sekunde ergibt sich eine Gesamtspeicherdauer von ca. 15 Minuten Sprechzeit. Zur Speicherung der Phrasen von ca. 90 Sekunden werden ca. 400 kbit Speicherplatz benötigt. Wenn für eine mehrsprachige Bedienerführung und/oder -information mehrere Phrasensätze abgespeichert werden müssen, so sind bei beispielsweise 4 Sprachen bereits ca. 6 Minuten der Gesamtaufzeichnungszeit durch diese 4 Phrasensätze belegt.

Um die Aufnahmezeit für Ansagen und eingehende Nachrichten von ca. 15 Minuten zu erhalten, ist in diesem Fall ein weiterer Sprachspeicher erforderlich, der zusätzliche Kosten verursacht. US 5,499,285 A veröffentlicht ein System, das zur Speicherung von mehrsprachigen Nachrichten einen an dem Anrufbeantworter angeschlossenen Rechner benutzt. Eine Alternative ist die Fertigung von Ländervarianten, d.h. von länderspezifischen Anrufbeantwortern, mit einem eigenen Produkt je Sprache.

Der Erfindung liegt die Aufgabe zugrunde eine mehrsprachige Bedienerführung und/oder -information mit einem vergleichsweise kostengünstigen Speicherbedarf zu ermöglichen.

Diese Aufgabe wird erfindungsgemäß durch die im Patentanspruch 1 bzw. 2 angegebenen Merkmale gelöst.

Das erfindungsgemäße Verfahren bietet dem Anwender eines Kommunikationsendgerätes eine Bedienerführung bzw, -information in einer Vielzahl von Sprachen, beispielsweise in seiner Muttersprache, ohne daß die Speicherkosten erhöht oder für jede Sprache eine eigene Ländervariante produziert werden müßte.

Im folgenden wird die Erfindung anhand eines in der Zeichnung dargestellten Ausführungsbeispieles beschrieben. Dabei zeigen:
Figur 1 ein Blockschaltbild eines Anrufbeantworters zur Durchführung des erfindungsgemäßen Verfahrens, und
Figur 2 und 3 verschiedene Belegungszustände eines Sprachspeichers.

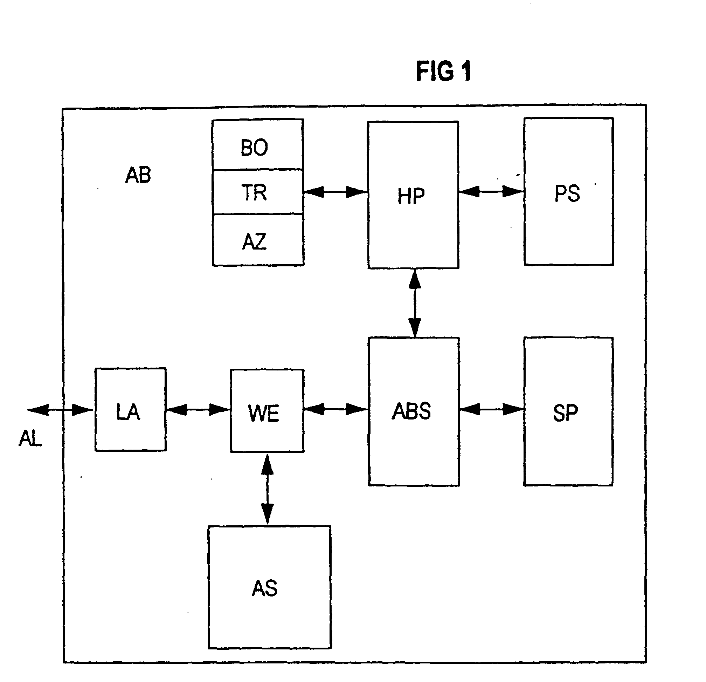

In Figur 1 ist ein digitaler Anrufbeantworter AB mit einem Hauptprozessor HP dargestellt. Der Hauptprozessor HP ist mit einem Programmspeicher PS und einer Bedienoberfläche BO verbunden. Der Programmspeicher PS ist vorzugsweise durch einen ROM-Speicherbaustein realisiert. Die Bedienoberfläche BO kann einen Tastaturblock TR und eine Anzeigeeinrichtung AZ aufweisen. Der Hauptprozessor HP ist weiter mit einem Anrufbeantworterschaltkreis ABS verbunden, an dem ein Sprachspeicher SP angeschaltet ist. Der Anrufbeantworterschaltkreis ABS ist über eine Wandlereinrichtung WE zur digital-analog und analog-digital Wandlung mit einer Leitungsanschaltung LA verbunden. Über eine Anschlußleitung AL ist die Leitungsanschaltung LA mit einem nicht näher dargestellten Kommunikationsnetz verbunden. Die Wandlereinrichtung WE ist mit einer akustischen Schnittstelle AS verbunden, die die Sprachein- und - ausgabe mit einem Anwender ermöglicht, und hierzu beispielsweise ein Mikrophon und einen Lautsprecher aufweist.

Im Sprachspeicher SP sind in einer ersten Ausführungsform der Erfindung bzw. im Programmspeicher PS in einer zweiten Ausführungsform der Erfindung die Phrasen zur Bedienerführung bzw. -information des Benutzers des Anrufbeantworters AB abgespeichert. Diese Phrasen in einer Sprache werden bei der folgenden Beschreibung in der Gesamtheit als Phrasensatz bezeichnet.

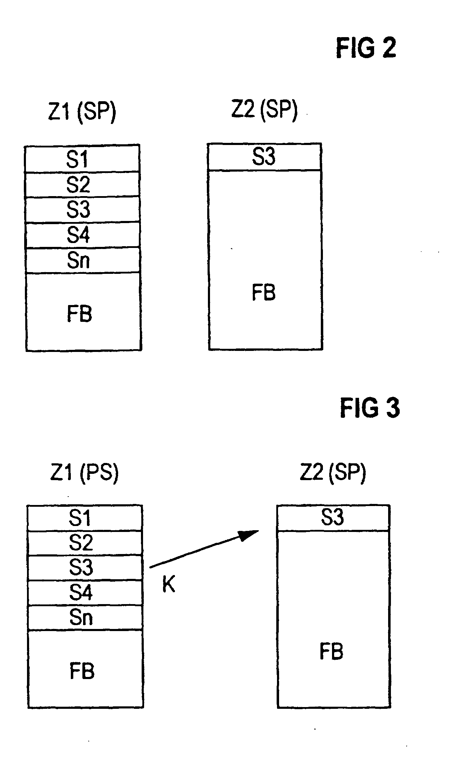

Bei der folgenden Beschreibung wird auch auf die Figur 2 Bezug genommen.

Erfindungsgemäß sind im Auslieferungszustand des Anrufbeantworters AB im Sprachspeicher SP eine Mehrzahl von Phrasensätzen S1 bis Sn in unterschiedlichen Sprachen, Dialekten oder Stimmlagen gespeichert. Dieser Auslieferungszustand ist in FIG 2 als Zustand Z1(SP) dargestellt. Der nicht mit Phrasensätzen S1 bis Sn belegte Speicherbereich des Sprachspeichers SP ist als freier Bereich FB bezeichnet.

Der Anwender kann bei der Inbetriebnahme des Anrufbeantworters AB einen gewünschten Phrasensatz, beispielsweise Phrasensatz S3, auswählen. Hierzu durchläuft der Anwender ein Menü zur Auswahl einer der Sprachvarianten, d. h. eines der Phrasensätze S1 bis Sn. Nach beispielsweise einer zusätzlichen Sicherheitsabfrage verbleibt nur der ausgewählte Phrasensatz S3 im Sprachspeicher SP. Die übrigen Phrasensätze werden gelöscht, und dieser Speicherplatz als freier Bereich FB wieder für Ansagen und eingehende Nachrichten freigegeben. Dies ist der Zustand Z2(SP).

Bei der folgenden Beschreibung wird auch auf die Figur 3 Bezug genommen.

Erfindungsgemäß sind im Auslieferungszustand des Anrufbeantworters AB im Programmspeicher PS eine Mehrzahl von Phrasensätzen S1 bis Sn in unterschiedlichen Sprachen, Dialekten oder Stimmlagen gespeichert. Dieser Auslieferungszustand ist in FIG 3 als Zustand Z1(PS) dargestellt. Der nicht mit Phrasensätzen S1 bis Sn belegte Speicherbereich des Programmspeichers PS ist als freier Bereich FB bezeichnet. Die Speicherung der Phrasensätze S1 bis Sn im kostengünstigen ROM-Speicherbaustein des Programmspeichers PS ermöglicht die Speicherung der Phrasen mit geringen Hardwarekosten. Falls das Hauptprogramm nicht den gesamten Speicherbereich des Programmspeichers PS belegt, ist die Phrasenspeicherung ohne Mehrkosten möglich.

Der Anwender kann bei der Inbetriebnahme des Anrufbeantworters AB einen gewünschten Phrasensatz, beispielsweise Phrasensatz S3, auswählen. Hierzu durchläuft der Anwender ein Menü zur Auswahl einer der Sprachvarianten, d. h. eines der Phrasensätze S1 bis Sn. Der ausgewählte Phrasensatz S3 wird in den Sprachspeicher SP kopiert. Dieser Vorgang ist in der FIG 3 als Pfeil K symbolisch dargestellt und der Zustand mit Z2(SP) bezeichnet. Der Kopiervorgang ist erforderlich, da in der Regel der Anrufbeantworterschaltkreis ABS nicht auf den Programmspeicher PS zugreifen kann.

Diese Alternative ist auch für Anrufbeantworter mit flüchtigen Speichern, sog. DRAM-Speicherbausteinen, geeignet, da die Phrasen bei Speicherverlust wieder aus dem Programmspeicher PS nachgeladen werden können.

Durch das erfindungsgemäße Verfahren in seiner zweiten Ausgestaltung wird auch ein späterer Wechsel der Sprache ermöglicht.

Um nicht grundsätzlich einen Ladevorgang vor Inbetriebnahme des Anrufbeantworters AB durchführen zu müssen, kann bei der zweiten Ausgestaltung des erfindungsgemäßen Verfahrens der Sprachspeicher SP des Anrufbeantworters AB im Auslieferungszustand bereits einen Phrasensatz enthalten, der dann bei dem Kopiervorgang überschrieben wird..

## Patentansprüche

1. Verfahren zur Ausgabe von Phrasen zur Bedienerführung und/oder -information bei einem Kommunikationsendgerät (AB), bei dem die Phrasen als Phrasensatz (MP) in einem Sprachspeicher (SP) gespeichert sind,
**dadurch gekennzeichnet, daß**
im Auslieferungszustand des Kommunikationsendgerätes (AB) im Sprachspeicher (SP) mehr als ein einziger Phrasensatz (S1 bis Sn) gespeichert ist, wobei bei der Inbetriebnahme des Kommunikationsendgerätes (AB) ein Phrasensatz (S3) ausgewählt wird und gespeichert bleibt, während die restlichen Phrasensätze (S1, S2, S4 bis Sn) gelöscht werden.

2. Verfahren zur Ausgabe von Phrasen zur Bedienerführung und/oder -information bei einem Kommunikationsendgerät (AB), bei dem die Phrasen als Phrasensatz (MP) in einem Sprachspeicher (SP) gespeichert sind,
**dadurch gekennzeichnet, daß**
im Auslieferungszustand des Kommunikationsendgerätes (AB) in einem Programmspeicher (PS) mehr als ein einziger Phrasensatz (S1 bis Sn) gespeichert ist, wobei bei der Inbetriebnahme des Kommunikationsendgerätes (AB) ein Phrasensatz (S3) ausgewählt und im Sprachspeicher (SP) gespeichert wird.

## Claims

1. Method for outputting phrases for guiding and/or informing users in a communications terminal (AB) in which the phrases are stored as a phrase set (MP) in a voice memory (SP), **characterized in that** in the supplied state of the communications terminal (AB) more than a single phrase set (S1 to Sn) are stored in the voice memory (SP), a phrase set (S3) being selected and remaining stored when the communications terminal (AB) is activated, while the other phase sets (S1, S2, S4 to Sn) are deleted.

2. Method for outputting phrases for guiding and/or informing users in a communications terminal (AB) in which the phrases are stored as a phrase set (MP) in a voice memory (SP), **characterized in that** in the supplied state of the communications terminal (AB) more than a single phrase set (S1 to Sn) are stored in a program memory (PS), a phrase set (S3) being selected and stored in the voice memory (SP) when the communications terminal (AB) is activated.

## Revendications

1. Procédé destiné à éditer des phrases destinées à un guide de l'utilisateur et/ou à une information de l'utilisateur sur un terminal de communication (AB),
dans lequel les phrases sont mémorisées en tant que jeu de phrases (MP) dans une mémoire de langues (SP),
**caractérisé par le fait**
**que**, dans l'état de livraison du terminal de communication (AB), plus d'un seul jeu de phrases (S1 à Sn) est mémorisé dans la mémoire de langues (SP), un jeu de phrases (S3) étant sélectionné, lors de la mise en service du terminal de communication (AB), et restant mémorisé, alors que les autres jeux de phrases (S1, S2, S4 à Sn) sont effacés.

2. Procédé destiné à éditer des phrases destinées à un guide de l'utilisateur et/ou à une information de l'utilisateur sur un terminal de communication (AB),
dans lequel les phrases sont mémorisées en tant que jeu de phrases (MP) dans une mémoire de langues (SP),
**caractérisé par le fait**
**que**, dans l'état de livraison du terminal de communication (AB), plus d'un seul jeu de phrases (S1 à Sn) est mémorisé dans une mémoire de programmes (PS), un jeu de phrases (S3) étant sélectionné, lors de la mise en service du terminal de communication (AB), et étant mémorisé dans la mémoire de langues (SP).
